# EUROPÄISCHE PATENTANMELDUNG

(11) **EP 3 456 997 A1**
(43) Veröffentlichungstag der Anmeldung: **20.03.2019**
(21) Anmeldenummer: 18191299.9
(22) Anmeldetag: 28.08.2018
(51) Int. Cl.: F16H 1/48

(54) **PLANETENGETRIEBE**

(30) Priorität: 15.09.2017 DE 102017008674
(71) Anmelder: Rolls-Royce Deutschland Ltd & Co KG, 15827 Blankenfelde-Mahlow (DE)
(72) Erfinder: Venter, Gideon Daniel, 15827 Blankenfelde-Mahlow (DE); Schwarze, Jan, 15827 Blankenfelde-Mahlow (DE)

(57) **Zusammenfassung**

Es wird ein Planetengetriebe (5) mit einem Sonnenrad (18), mit einem Hohlrad (20) und mit einem Planetenträger (19) beschrieben, auf dem wenigstens ein Planetenrad (21) drehbar gelagert ist. Das Planetenrad (21) steht sowohl mit dem Hohlrad (20) als auch mit dem Sonnenrad (18) in Eingriff. Das Sonnenrad (18) und das Hohlrad (20) sind jeweils in axialer Richtung auf einer ersten Seite des Planetenträgers (19) mit Verbindungsbereichen (25, 27) zum Ankoppeln des Sonnenrades (18) und des Hohlrades (20) an drehbare oder drehfeste Bereiche eines Strahltriebwerkes ausgeführt, während der Planetenträger (19) auf seiner gegenüberliegenden zweiten Seite einen Verbindungsbereich (26) zum Anbindung des Planetenträgers (19) an drehbare oder drehfeste Bereiche eines Strahltriebwerkes aufweist. Erfindungsgemäß sind Bauteilsteifigkeiten des Sonnenrades (18), des Planetenträgers (19), des Hohlrades (20) und des Planetenrades (21) so aufeinander abgestimmt, dass das Sonnenrad (18), der Planetenträger (19), das Hohlrad (20) und das Planetenrad (21) im Betrieb innerhalb eines Betriebsbereiches des Strahltriebwerkes in axialer Richtung des Planetengetriebes (5) zwischen den Verbindungsbereichen (25, 26, 27) und den den Verbindungsbereichen (25, 26, 27) abgewandten Seitenbereichen aufgrund der jeweils anliegenden Drehmomente ausgehend von einer Seite des Planetenträgers (19) in Richtung der gegenüberliegenden Seite des Planetenträgers (19) jeweils einander qualitativ entsprechende Verdrillungen aufweisen.

## Beschreibung

Die Erfindung betrifft ein Planetengetriebe gemäß der im Oberbegriff des Patentanspruches 1 definierten Art.

Aus der Praxis bekannte einfache Planetengetriebe umfassen üblicherweise ein Sonnenrad, ein Hohlrad und einen Planetenträger, auf dem wenigstens ein Planetenrad drehbar gelagert ist. Das Planetenrad steht sowohl mit dem Hohlrad als auch mit dem Sonnenrad in Eingriff. Zum Ankoppeln an drehbare oder drehfeste Bereiche eines Strahltriebwerks sind die Wellen des Planetengetriebes bzw. das Sonnenrad, das Hohlrad sowie der Planetenträger mit Verbindungsbereichen ausgeführt.

Im Betrieb eines Strahltriebwerkes können die an einem solchen Planetengetriebe anliegenden Drehmomente Verdrillungen bzw. Verwindungen des Sonnenrades, des Hohlrades, des Planetenrades und des Planetenträgers in Umfangsrichtung bewirken. Diese Verformungen treten vor allem dann auf, wenn die Verbindungsbereiche des Sonnenrades, des Hohlrades sowie des Planetenträgers sich in axialer Richtung des Planetengetriebes zwischen diesen und Koppelbereichen zwischen den Wellen eines Planetengetriebes und den drehbaren oder den drehfesten Bereichen eines Strahltriebwerkes erstrecken. Dabei steigen die Verwindungen bzw. Verdrillungen in axialer Richtung des Planetengetriebes jeweils zwischen den Verbindungsbereichen des Sonnenrades, des Hohlrades und des Planetenträgers und der jeweils gegenüberliegenden freien Seite dieser Bauteile in Abhängigkeit der jeweils vorliegenden Bauteilsteifigkeit mit jeweils definiertem Verlauf an.

Die Verdrillungen der verschiedenen Bauteile eines Planetengetriebes bewirken wiederum, dass eine Orientierung von Zahnflanken der miteinander in Eingriff stehenden Zahnbereiche des Sonnenrades und des Planetenrades sowie des Planetenrades und des Hohlrades ausgehend von einem unbelasteten Betriebszustand des Planetengetriebes in Richtung eines Betriebsbereiches des Strahltriebwerkes, in dem hohe Lasten am Planetengetriebe anliegen, durch die anliegende Last im Betrieb verdreht bzw. verschwenkt werden. Dies führt dazu, dass Kontaktflächen zwischen miteinander in Eingriff stehenden Zähnen der vorgenannten Verzahnungsbereiche im Betrieb in unerwünschtem Umfang reduziert werden.

Dabei besteht die Möglichkeit, dass im Bereich der Kontaktflächen der Verzahnungsbereiche unzulässig hohe Verpressungen bzw. Belastungen auftreten, die die Funktionsweise des Planetengetriebes aufgrund irreversibler Schädigungen der Zahnflanken dauerhaft beeinträchtigen. Um die Verdrillungen bzw. Verwindungen im Bereich des Sonnenrades, des Hohlrades, des Planetenträgers und des Planetenrades in gewünschtem Umfang zu begrenzen, sind diese mit einer entsprechend hohen Bauteilsteifigkeit auszuführen. Diese Vorgehensweise bedingt jedoch große Bauteilabmessungen, die ein hohes Bauteilgewicht eines Planetengetriebes verursachen, was jedoch den Auslegungskriterien von Flugtriebwerken entgegensteht.

Des Weiteren besteht auch die Möglichkeit, im Bereich der Zahneingriffe eine Profilkorrektur über die jeweilige Zahnbreite vorzusehen, wobei hierfür wiederum die Zahnflanken entsprechend größer und breiter auszuführen sind. Dies erhöht jedoch auch die Bauteilabmessungen eines Planetengetriebes und auch nachteilhafterweise wiederum das Bauteilgewicht eines Planetengetriebes.

Der vorliegenden Erfindung liegt daher die Aufgabe zugrunde, ein bauraumgünstiges und durch ein geringes Bauteilgewicht gekennzeichnetes Planetengetriebe zur Verfügung zu stellen, das zudem durch eine hohe Lebensdauer gekennzeichnet ist.

Erfindungsgemäß wird diese Aufgabe mit einem Planetengetriebe mit den Merkmalen des Patentanspruches 1 gelöst.

Das erfindungsgemäße Planetengetriebe umfasst wenigstens ein Sonnenrad, wenigstens ein Hohlrad und einen Planetenträger. Auf dem Planetenträger ist wenigstens ein Planetenrad drehbar gelagert. Das Planetenrad steht sowohl mit dem Hohlrad als auch mit dem Sonnenrad in Eingriff. Das Sonnenrad und das Hohlrad sind jeweils in axialer Richtung auf einer ersten Seite des Planetenträgers mit Verbindungsbereichen zum Ankoppeln des Sonnenrades und des Hohlrades an drehbare oder drehfeste Bereiche eines Strahltriebwerks ausgeführt, während der Planetenträger auf seiner gegenüberliegenden zweiten Seite einen Verbindungsbereich zum Anbinden des Planetenträgers an drehbare oder drehfeste Bereiche eines Strahltriebwerks aufweist.

Erfindungsgemäß sind die Bauteilsteifigkeiten des Sonnenrades, des Planetenträgers, des Hohlrades und des Planetenrades so aufeinander abgestimmt, dass das Sonnenrad, der Planetenträger, das Hohlrad und das Planetenrad im Betrieb innerhalb eines Betriebsbereiches des Strahltriebwerkes in axialer Richtung des Planetengetriebes zwischen den Verbindungsbereichen und den den Verbindungsbereichen abgewandten Seitenbereichen aufgrund der jeweils anliegenden Drehmomente ausgehend von einer Seite des Planetenträgers in Richtung der gegenüberliegenden Seite des Planetenträgers jeweils einander qualitativ entsprechende Verdrillungen aufweisen.

Dadurch wird auf einfache Art und Weise erreicht, dass die Zahnbereiche des Sonnenrades, des Planetenrades und des Hohlrades jeweils lediglich in geringem Umfang gegeneinander verdreht werden und die Kontaktflächen zwischen zusammenwirkenden Zahnflanken der Zahnbereiche des Sonnenrades und des Planetenrades sowie zwischen dem Planetenrad und dem Hohlrad in einem die Funktionsweise des Planentengetriebes aufrechthaltenden Umfang ausgebildet ist. Damit sind das Sonnenrad, das Hohlrad, der Planetenträger und das Planetenrad im Vergleich zu aus der Praxis bekannten Lösungen sowohl bauraumgünstig als auch mit geringem Bauteilgewicht ausführbar.

Durch die erfindungsgemäße Ausführung des Planetengetriebes ist eine Abweichung bzw. Schrägstellung im Bereich der Zahneingriffe zwischen dem Hohlrad und dem Planetenrad sowie zwischen dem Planetenrad und dem Sonnenrad jeweils gering. Dadurch werden unerwünschte Punktbelastungen in den Anlagebereichen der Zahnflanken dieser Verzahnungsbereiche auf einfache Art und Weise verringert. Punktbelastungen in Verzahnungsbereichen sind zwar auch durch entsprechend ballig ausgeführte Verzahnungen generell reduzierbar, jedoch verursachen ballige Verzahnungen einen hohen Fertigungsaufwand und erfordern entsprechend große Zahnbreiten.

Bei einer vorteilhaften Ausführungsform des erfindungsgemäßen Planetengetriebes sind das Sonnenrad, das Hohlrad und das Planetenrad jeweils mit zwei zueinander in axialer Richtung beabstandeten Zahnbereichen ausgebildet.

Darüber hinaus weisen das Sonnenrad, das Hohlrad und das Planetenrad zwischen den Zahnbereichen wenigstens zwei in Umfangsrichtung zueinander beabstandete Bereiche auf, deren Wandstärken von den weiteren umfangsseitigen Bereichen zwischen den Zahnbereichen bzw. von den jeweils dazwischen liegenden umfangsseitigen Bereichen abweichen.

Dabei besteht die Möglichkeit, dass die Bereiche beispielsweise mit Versteifungsrippen ausgeführt sind und deren Wandstärken größer sind als die Wandstärken der umfangsseitigen Bereiche zwischen den Zahnbereichen. Darüber hinaus besteht auch die Möglichkeit, dass die Bereiche mit geringeren Wandstärken, vorzugsweise mit Aussparungen, wie Schlitze, Bohrungen oder dergleichen, als die umfangsseitigen Bereiche zwischen den Zahnbereichen ausgebildet sind. Generell wird durch die Maßnahme eine definierte Beeinflussung bzw. Einstellung der Bauteilsteifigkeit angestrebt.

Über die in vorstehendem Umfang ausgebildeten ausgeführten Bereiche sind die Bauteilsteifigkeiten des Sonnenrades, des Hohlrades und des Planetenrades in gewünschtem Umfang an den jeweils vorliegenden Anwendungsfall bzw. Betriebsfall angepasst einstellbar. Mittels dieser definierten Bauteilsteifigkeit ist jeweils eine definierte Verdrillung des Sonnenrades, des Hohlrades und des Planetenrades im Betrieb innerhalb des Betriebsbereiches eines Strahltriebwerkes in definiertem Umfang erzielbar und eine möglichst große Kontaktfläche im Verzahnungsbereich zwischen dem Sonnenrad und dem Planetenrad sowie zwischen dem Hohlrad und dem Planetenrad auf einfache Art und Weise erreichbar. Weisen die Zahnbereiche des Sonnenrades, des Hohlrades und des Planetenrades jeweils Schrägverzahnungen auf, ist ein jeweils anliegendes Drehmoment im Vergleich zu einer Gradverzahnung mit einer besseren Laufruhe sowie mit einer geringeren Geräuschentwicklung gleichmäßig übertragbar.

Ist der Winkel, den die Schrägverzahnungen der Zahnbereiche des Sonnenrades, des Hohlrades und des Planetenrades jeweils mit den Drehachsen einschließen, gleich, sind jeweils abzustützende und aus den Zahneingriffen resultierende Axialkräfte gering.

Weicht der Winkel, den die Schrägverzahnungen der Zahnbereiche des Sonnenrades, des Hohlrades und des Planetenrades jeweils mit den Drehachsen dieser Bauteile einschließen, voneinander ab, sind Verdrehungen der Zahnflanken zwischen den Zahnbereichen des Sonnenrades und des Planetenrades sowie zwischen dem Hohlrad und dem Planetenrad durch eine entsprechende Vorgabe der Winkelwerte kompensierbar und wiederum die Kontaktflächen zwischen den Zahneingriffen in gewünschtem Umfang einstellbar.

Werden die Winkelwerte der Winkel der Schrägverzahnungen der Zahnbereiche des Sonnenrades, des Hohlrades und des Planetenrades zur Kompensation der Verdrillung des Planetenträgers in Umfangsrichtung jeweils in Drehrichtung des Sonnenrades, des Hohlrades und des Planetenrades um einen definierten Offsetwert angehoben, weisen die Kontaktflächen zwischen den Zahneingriffen zwischen dem Sonnenrad und dem Planetenrad sowie zwischen dem Planetenrad und dem Hohlrad auch bei anliegenden hohen Lasten auf einfache Art und Weise ein erforderliches Maß auf.

Sind die Verbindungsbereiche des Sonnenrades, des Hohlrades und/oder des Planetenträgers mit wenigstens zwei in Umfangsrichtung zueinander beabstandete Bereiche ausgeführt, deren Wandstärken von den jeweils dazwischen liegenden umfangsseitigen Bereichen abweichen, sind die Bauteilsteifigkeiten wiederum in gewünschtem Umfang auf konstruktiv einfache Art und Weise einstellbar.

Bei einer weiteren vorteilhaften Ausführungsform des erfindungsgemäßen Planetengetriebes sind die Zähne des Sonnenrades, des Hohlrades und des Planetenrades ballig ausgeführt. Damit können aus den Verdrillungen des Planetenträgers, des Sonnenrades, des Hohlrades und des Planetenrades resultierende Verdrehungen der Verzahnungen zwischen dem Sonnenrad und dem Planetenrad sowie zwischen dem Planetenrad und dem Hohlrad auf einfache Art und Weise ausgeglichen werden.

Das Hohlrad ist bei einer weiteren vorteilhaften Ausführungsform des erfindungsgemäßen Planetengetriebes zweiteilig ausgeführt. Dabei ist es vorgesehen, dass jeder der Hohlradteile einen der Zahnbereiche des Hohlrades umfasst. Des Weiteren sind die Bauteilsteifigkeiten der Hohlradteile derart ausgelegt, dass Verdrillungen der Hohlradteile in Umfangsrichtung im Betrieb innerhalb des definierten Betriebsbereiches jeweils eine definierte Schrägstellung der Zähne der Zahnbereiche bewirken. Dadurch ist wiederum mit geringem konstruktiven Aufwand gewährleistbar, dass Kontaktflächen auch bei am Planetengetriebe anliegenden hohen Lasten zwischen den Zahneingriffen des Sonnenrades und des Planetenrades sowie des Planetenrades und des Hohlrades eine irreversible Schädigungen des Planetengetriebes vermeidende Größe nicht unterschreiten.

Ist dem unbelasteten Planetenträger durch das montierte Planetenrad in axialer Richtung eine Verdrillung aufgeprägt, die der im Betrieb innerhalb des Betriebsbereiches auftretenden Verdrillung des Planetenträgers entgegengerichtet ist, sind aus den Verdrillungen des Sonnenrades, des Hohlrades, des Planetenträgers und des Planetenrades resultierende Verdrehungen der Zahnflanken bzw. der Zahnbereiche dieser Bauelemente des Planetengetriebes wiederum auf einfache Art und Weise reduzierbar.

Sowohl die in den Patentansprüchen angegebenen Merkmale als auch die in den nachfolgenden Ausführungsbeispielen des erfindungsgemäßen Planetengetriebes angegebenen Merkmale sind jeweils für sich allein oder in beliebiger Kombination miteinander geeignet, den erfindungsgemäßen Gegenstand weiterzubilden.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine vereinfachte Schnittdarstellung eines Strahltriebwerks, wobei ein Bläser über ein Planetengetriebe mit einer Niederdruckturbine in Wirkverbindung steht;
- Fig. 2: eine stark schematisierte Längsschnittansicht eines oberen Bereiches einer ersten Ausführungsform eines Planetengetriebes, dessen Planetenträger gehäuseseitig festgelegt ist;
- Fig. 3: eine aufgelöste Darstellung des Planetengetriebes gemäß Fig. 2 sowie mehrere Verläufe von Verdrillungen eines Sonnenrades, eines Planetenrades, des Planetenträgers und eines Hohlrades des Planetengetriebes in axialer Richtung, die im Betrieb in einem definierten Betriebspunkt eines Strahltriebwerkes auftreten;
- Fig. 4: eine Fig. 1 entsprechende Darstellung einer zweiten Ausführungsform des Planetengetriebes, bei dem das Hohlrad gehäuseseitig festgelegt ist; und
- Fig. 5: eine Fig. 2 entsprechende Darstellung des Planetengetriebes gemäß Fig. 4.

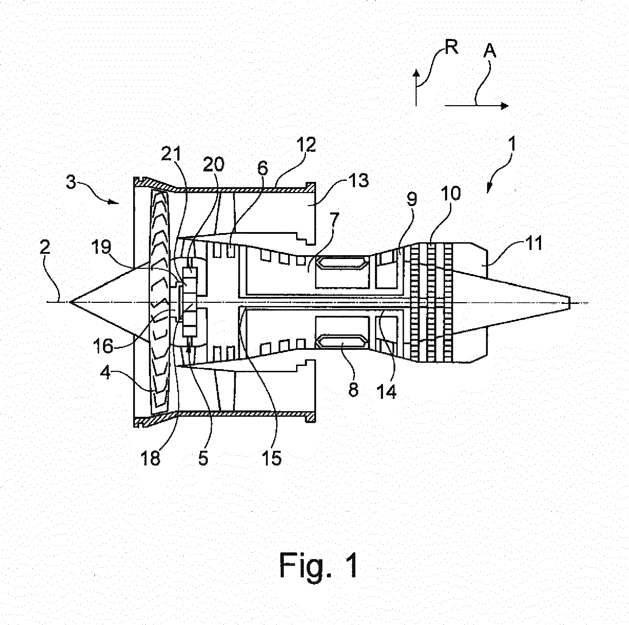

In Fig. 1 ist eine als Strahltriebwerk 1 eines Flugzeugs ausgeführte Strömungsmaschine mit einem nachfolgend näher beschriebenen Planetengetriebe 5 gezeigt. Das Strahltriebwerk 1 ist eine Turbomaschine, mit der das Planetengetriebe 5 vorteilhaft kombiniert werden kann. Aus dem Folgenden ergibt sich eindeutig, dass das Planetengetriebe 5 auch bei anderweitig ausgeführten Turbomaschinen eingesetzt werden kann.

Das Strahltriebwerk 1 weist eine Hauptdrehachse 2 auf. Des Weiteren umfasst das Strahltriebwerk 1 in axialer Strömungsrichtung A einen Lufteinlass 3, einen Bläser 4, die Planetengetriebevorrichtung 5, einen Niederdruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Strahltriebwerk 1 und begrenzt den Lufteinlass 3.

Das Strahltriebwerk 1 arbeitet in herkömmlicher Weise, wobei in den Lufteinlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Niederdruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende Druckluft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Niederdruckverdichter 6 an. Die die Niederdruckturbine 10 mit dem Niederdruckverdichter 6 koppelnde Niederdruckwelle 15 ist über das ein Untersetzungsgetriebe darstellende Planetengetriebe 5 mit dem Bläser 4 gekoppelt. Ein über die Niederdruckwelle 15 an der Planetengetriebevorrichtung 5 anliegendes Antriebsmoment der Standübersetzung der Planetengetriebevorrichtung 5 wird entsprechend angehoben und einer Bläserwelle 16 zugeführt. Wenn der Bläser 4 von der Niederdruckturbine 10 angetrieben wird, wird die Drehzahl der Niederdruckwelle 15 der Übersetzung des Planetengetriebe 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

Bei der in Fig. 1 gezeigten Ausführung des Planetengetriebes 5 ist ein Sonnenrad 18 des Planetengetriebes 5 drehfest mit der Niederdruckwelle 15 und ein Planetenträger 19 des Planetengetriebes 5 drehfest mit der Bläserwelle 16 verbunden. Ein Hohlrad 20 des Planetengetriebes 5 ist gehäusefest angebunden. Somit liegt eine so genannte epizyklische Ausführung vor.

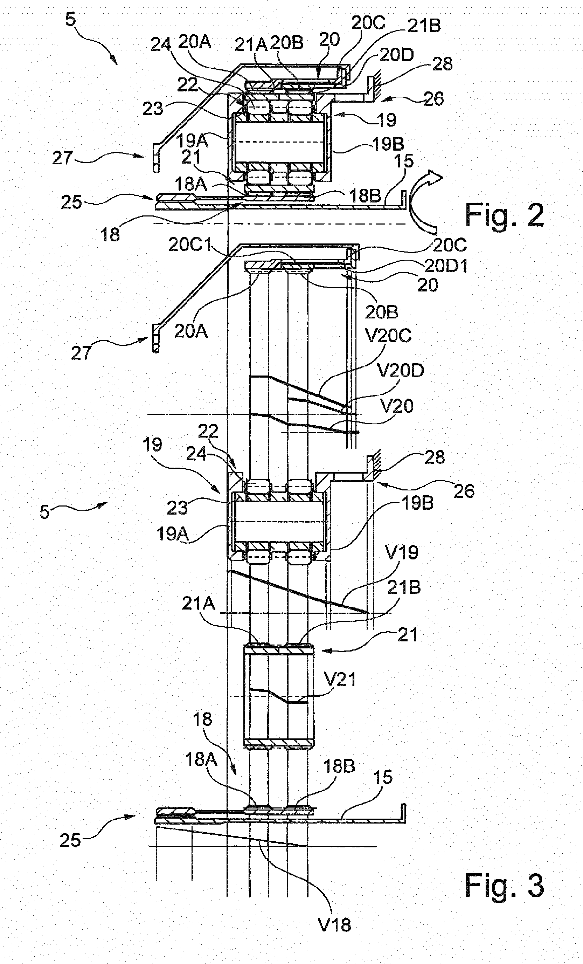

Das Planetenrad 21 ist in der in Fig. 2 dargestellten Art und Weise über ein Wälzlager im vorliegend zweiteilig ausgeführten Planetenträger 19 drehbar gelagert. Dabei umfasst das Wälzlager 22 einen inneren Lagerring 23, über das das Wälzlager 22 in axial äußeren Bereichen mit miteinander verbundenen Planetenträgerbereichen 19A, 19B wirkverbunden ist. Zwischen dem inneren Lagerring 23 und dem Planetenrad 21 sind Wälzkörper 24 des Wälzlagers 22 angeordnet.

In Abhängigkeit des jeweils vorliegenden Anwendungsfalles besteht auch die Möglichkeit, dass das Planetenrad 21 über ein Gleitlager drehbar am Planetenträger 19 des Planetengetriebes 5 gelagert ist.

Das Sonnenrad 18, das Hohlrad 20 und das Planetenrad 21 sind jeweils mit einer Doppelschrägverzahnung ausgebildet, wobei Zahnbereiche 18A, 18B des Sonnenrades 18, Zahnbereiche 20A, 20B des Hohlrades 20 und Zahnbereiche 21A, 21B des Planetenrades 21 in axialer Richtung A des Planetengetriebes 5 zueinander beabstandet sind.

Das Hohlrad 20 ist zweiteilig ausgeführt. Ein erster Teil 20C des Hohlrades 20 weist den ersten Zahnbereich 20A und ein zweiter Hohlradteil 20D des Hohlrades 20 weist den zweiten Zahnbereich 20B auf. Die beiden Hohlradteile 20C und 20D sind mit mehreren in Umfangsrichtung zueinander beabstandeten Bereichen 20C1, 20D1 ausgebildet, deren Wandstärke jeweils von den Wandstärken der restlichen Umfangsbereiche der Hohlradteile 20C und 20D abweichen. Dabei ist die Wandstärke der Bereiche 20C1 und 20D1 bei dem in Fig. 2 dargestellten Ausführungsbeispiel des Planetengetriebes 5 gleich null, womit die Hohlradteile 20C und 20D in Umfangsrichtung mehrere Aussparungen aufweisen, um eine gewünschte Bauteilsteifigkeit einstellen zu können.

Abweichend hiervon kann es auch vorgesehen sein, dass beispielsweise die Bereiche 20C1, 20D1 mit Versteifungsrippen ausgebildet sind und dann eine größere Wandstärke aufweisen als die restlichen Umfangsbereiche der Hohlradteile 20C und 20D, um die Bauteilsteifigkeit in gewünschtem Umfang zu definieren bzw. zu erhalten.

Das Sonnenrad 18, der Planetenträger 19 und das Hohlrad 20 sind in dem in Fig. 2 dargestellten Umfang jeweils mit Verbindungsbereichen 25, 26, 27 ausgeführt. Dabei ist der Planetenträger 19 über den Verbindungsbereich 26 auf der dem Planetenrad 21 abgewandten Seite des Planetenträgerbereiches 19B mit einem Gehäuseteil 28 des Strahltriebwerks 1 drehfest verbunden. Das Hohlrad 20 ist über den Verbindungsbereich 27 auf der dem Planetenrad 21 abgewandten Seite des Planetenträgerbereiches 19A mit der Bläserwelle 16 drehfest gekoppelt. Das Sonnenrad 18 steht wiederum über den Verbindungsbereich 25 auf der dem Planetenrad 21 abgewandten Seite des Planetenträgerbereiches 19B mit der Niederdruckwelle 15 in Wirkverbindung.

Das Sonnenrad 18, der Planetenträger 19, das Hohlrad 20 und das Planetenrad 21 sind jeweils mit einer definierten Bauteilsteifigkeit ausgeführt. Im Betrieb des Strahltriebwerks 1 stellen sich in Abhängigkeit der in einem definierten Betriebspunkt des Strahltriebwerks in axialer Richtung A des Planetengetriebes 5 die in Fig. 3 dargestellten Verläufe von Verdrillungen des Sonnenrades 18, des Planetenträgers 19, des Hohlrades 20 und des Planetenrades 21 ausgehend vom Planetenträgerbereich 19B in Richtung des Planetenträgerbereiches 19A ein. Dabei entspricht der Verlauf V20C einer Verdrillung bzw. Verwindung des Hohlradteiles 20C. Der Verlauf V20D gibt die Verdrillung des Hohlradteiles 20D im Betrieb des Strahltriebwerks 1 an. Die aus den beiden Verläufen V20C und V20D resultierende effektive Verdrillung des Hohlrades 20 entspricht dem Verlauf V20.

Der in Fig. 3 gezeigte Verlauf V19 entspricht wiederum der Verdrillung des Planetenträgers 19, während der Verlauf V21 die Verdrillung des Planetenrades 21 wiedergibt. Zusätzlich entspricht der Verlauf V18 der Verdrillung im Bereich des Sonnenrades 18.

Die Bauteilsteifigkeiten des Sonnenrades 18, des Planetenträgers 19, des Hohlrades 20 und des Planetenrades 21 sind aufeinander abgestimmt. Dabei ist die Abstimmung so gewählt, dass das Sonnenrad 18, der Planetenträger 19, das Hohlrad 20 und das Planetenrad 21 im Betrieb des Strahltriebwerkes 1 und innerhalb eines definierten Betriebsbereiches des Strahltriebwerkes 1 in axialer Richtung A des Planetengetriebes 5 zwischen den Verbindungsbereichen 25, 26 und 27 und ihren den Verbindungsbereichen 25, 26 und 27 jeweils abgewandten Seitenbereichen einander qualitativ entsprechende Verdrillungen aufweisen.

Dadurch wird erreicht, dass aus den Verdrillungen des Sonnenrades 18, des Hohlrades 20, des Planetenträgers 19 und des Planetenrades 21 jeweils resultierende Verdrehungen der Zahnflanken der Zahnbereiche 18A, 18B des Sonnenrades gegenüber den Zahnbereichen 21A, 21B des Planetenrades 21 und der Zahnbereiche des Planetenrades 21A, 21B des Planetenrades 21 gegenüber den Zahnbereichen 20A und 20B des Hohlrades 20 gering sind. Daraus resultiert wiederum, dass die Kontaktflächen zwischen den jeweils miteinander in Eingriff stehenden Zahnflanken dieser Zahnbereiche ausreichend groß sind und unzulässig hohe Verpressungen bzw. jeweils eine unzulässig hohe Hertzsche Pressung im Bereich der Zahnflanken vermieden werden.

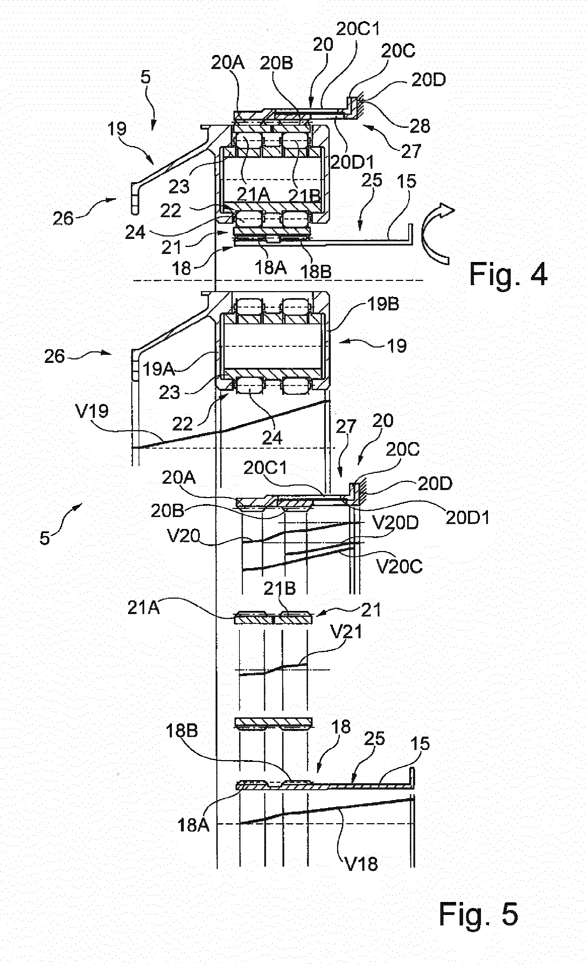

Fig. 4 zeigt eine Fig. 2 entsprechende Darstellung einer weiteren Ausführungsform des Planetengetriebes 5, bei dem das Hohlrad 20 drehfest mit dem Gehäuse 28 verbunden ist, während der Planetenträger 19 auf der gegenüberliegenden Seite des Planetenträgers 19 mit der Bläserwelle 16 in Wirkverbindung steht und damit drehbar ausgeführt ist. Das Sonnenrad 18 ist wiederum auf der Seite des Planetenträgers 19 drehfest mit der Niederdruckwelle 15 verbunden, auf der das Hohlrad 20 drehfest am Gehäuse 28 angebunden ist.

Fig. 5 zeigt wiederum eine Fig. 3 entsprechende Darstellung des Planetengetriebes 5 gemäß Fig. 4 und den sich im Bereich des Sonnenrades 18, des Planetenträgers 19, des Hohlrades 20 und des Planetenrades 21 im Betrieb des Strahltriebwerks in einem definierten Betriebspunkt des Strahltriebwerkes 1 dabei einstellenden Verläufen V18, V19, V20, V20C, V20D und V21 der Verdrillungen. Die Verdrillungen im Bereich des Sonnenrades 18, des Planetenträgers 19, des Hohlrades 20 und des Planetenrades 21 sind aufgrund der wiederum aufeinander abgestimmten Bauteilsteifigkeiten dieser Bauelemente des Planetengetriebes 5 ausgehend vom Planetenträgerbereich 19A in Richtung des Planetenträgerbereiches 19B allesamt ansteigend und entsprechen einander somit qualitativ.

Damit ist wiederum gewährleistet, dass Verdrehungen im Bereich der Verzahnungen zwischen dem Sonnenrad 18 und dem Planetenrad 21 sowie zwischen dem Planetenrad 21 und dem Hohlrad 20 derart gering sind, dass Kontaktflächen zwischen jeweils miteinander in Eingriff stehenden Zahnflanken dieser Zahneingriffe unzulässig hohe Hertzsche Pressungen vermeidende Umfänge aufweisen.

Darüber hinaus besteht auch die Möglichkeit, Planetengetriebe in der vorbeschriebenen Art und Weise auszuführen, bei den das Hohlrad, das Sonnenrad und auch der Planetenträger drehbar ausgeführt sind.

### Bezugszeichenliste

- 1: Strömungsmaschine; Strahltriebwerk
- 2: Drehachse
- 3: Lufteinlass
- 4: Bläser
- 5: Planetengetriebevorrichtung
- 6: Niederdruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 18: Sonnenrad
- 18A, 18B: Zahnbereich des Sonnenrades
- 19: Planetenträger
- 19A, 19B: Planetenträgerbereich
- 20: Hohlrad
- 20A, 20B: Zahnbereich des Hohlrades
- 20C, 20D: Hohlradteil
- 20C1, 20D1: Bereich
- 21: Planetenrad
- 21A, 21B: Zahnbereich des Planetenrades 21
- 22: Wälzlager
- 23: innerer Lagerring
- 24: Wälzkörper
- 25: Verbindungsbereich des Sonnenrades 18
- 26: Verbindungsbereich des Planetenträgers 19
- 27: Verbindungsbereich des Hohlrads 20
- 28: Gehäuse des Strahltriebwerkes 1
- A: axiale Richtung

## Patentansprüche

1. Planetengetriebe (5) mit wenigstens einem Sonnenrad (18), mit wenigstens einem Hohlrad (20) und mit einem Planetenträger (19), auf dem wenigstens ein Planetenrad (21) drehbar gelagert ist, das sowohl mit dem Hohlrad (20) als auch mit dem Sonnenrad (18) in Eingriff steht, wobei das Sonnenrad (18) und das Hohlrad (20) jeweils in axialer Richtung auf einer ersten Seite des Planetenträgers (19) mit Verbindungbereichen (25, 27) zum Ankoppeln des Sonnenrades (18) und des Hohlrades (20) an drehbare oder drehfeste Bereiche (28) eines Strahltriebwerks (1) ausgeführt sind, während der Planetenträger (19) auf seiner gegenüberliegenden zweiten Seite einen Verbindungsbereich (26) zum Anbinden des Planetenträgers (19) an drehbare oder drehfeste Bereiche (28) eines Strahltriebwerks (1) aufweist, **dadurch gekennzeichnet, dass** Bauteilsteifigkeiten des Sonnenrades (18), des Planetenträgers (19), des Hohlrades (20) und des Planetentrades (21) so aufeinander abgestimmt sind, dass das Sonnenrad (18), der Planetenträger (19), das Hohlrad (20) und das Planetenrad (21) im Betrieb des Strahltriebwerkes (1) innerhalb eines Betriebsbereiches in axialer Richtung (A) des Planetengetriebes (5) zwischen den Verbindungsbereichen (25 bis 27) und den den Verbindungsbereichen (25 bis 27) abgewandten Seitenbereichen aufgrund der jeweils anliegenden Drehmomente ausgehend von einer Seite des Planetenträgers (19) in Richtung der gegenüberliegenden Seite des Planetenträgers (19) jeweils einander qualitativ entsprechende Verdrillungen aufweisen.

2. Planetengetriebe nach Anspruch 1, **dadurch gekennzeichnet, dass** das Sonnenrad (18), das Hohlrad (20) und das Planetenrad (21) jeweils mit zwei zueinander in axialer Richtung beabstandeten Zahnbereichen (18A, 18B, 20A, 20B, 21A, 21B) ausgebildet sind und zwischen den Zahnbereichen (18A, 18B, 20A, 20B, 21A, 21B) wenigstens zwei in Umfangsrichtung zueinander beabstandete Bereiche (20C1, 20D1) aufweisen, deren Wandstärken von den jeweils dazwischen liegenden umfangsseitigen Bereichen abweichen.

3. Planetengetriebe nach Anspruch 1 oder 2, **dadurch gekennzeichnet, dass** die Zahnbereiche (18A, 18B, 20A, 20B, 21A, 21B) des Sonnenrades (18), des Hohlrades (20) und des Planetenrades (21) jeweils Schrägverzahnungen aufweisen.

4. Planetengetriebe nach Anspruch 3, **dadurch gekennzeichnet, dass** der Winkel, den die Schrägverzahnungen der Zahnbereiche (18A, 18B, 20A, 20B, 21A, 21B) des Sonnenrades (18), des Hohlrades (20) und des Planetenrades (21) jeweils mit den Drehachsen einschließen, gleich ist.

5. Planetengetriebe nach Anspruch 3, **dadurch gekennzeichnet, dass** der Winkel, den die Schrägverzahnungen der Zahnbereiche (18A, 18B, 20A, 20B, 21A, 21B) des Sonnenrades (18), des Hohlrades (20) und des Planetenrades (21) jeweils mit den Drehachsen einschließen, voneinander abweichen.

6. Planetengetriebe nach einem der Ansprüche 3 bis 5, **dadurch gekennzeichnet, dass** Winkelwerte der Winkel der Schrägverzahnungen der Zahnbereiche (18A, 18B, 20A, 20B, 21A, 21B) des Sonnenrades (18), des Hohlrades (20) und des Planetenrades (21) zur Kompensation der Verdrillung des Planetenträgers (19) in Umfangsrichtung jeweils in Drehrichtung des Sonnenrades (18), des Hohlrades (20) und des Planetenrades (21) um einen definierten Offsetwert angehoben werden.

7. Planetengetriebe nach einem der Ansprüche 1 bis 6, **dadurch gekennzeichnet, dass** die Verbindungsbereiche (25 bis 27) des Sonnenrades (18), des Hohlrades (20) und/oder des Planetenträgers (19) wenigstens zwei in Umfangsrichtung zueinander beabstandete Bereiche aufweisen, deren Wandstärken von den jeweils dazwischen liegenden umfangsseitigen Bereichen abweichen.

8. Planetengetriebe nach einem der Ansprüche 1 bis 7, **dadurch gekennzeichnet, dass** Zähne des Sonnenrades (18), des Hohlrades (20) und des Planetenrades (21) ballig ausgeführt sind.

9. Planetengetriebe nach einem der Ansprüche 1 bis 8, **dadurch gekennzeichnet, dass** das Hohlrad (20) zweiteilig ausgeführt ist, wobei jeder der Hohlradteile (20C, 20D) einen der Zahnbereiche (20A, 20B) umfasst und Bauteilsteifigkeiten der Hohlradteile (20C, 20D) derart ausgelegt sind, dass Verdrillungen der Hohlradteile (20C, 20D) in Umfangsrichtung im Betrieb innerhalb des definierten Betriebsbereiches jeweils eine definierte Schrägstellung der Zähne der Zahnbereiche (20A, 20B) bewirken.

10. Planetengetriebe nach einem der Ansprüche 1 bis 9, **dadurch gekennzeichnet, dass** dem unbelasteten Planetenträger (19) durch das montierte Planetenrad (21) in axialer Richtung eine Verdrillung aufgeprägt ist, die der im Betrieb innerhalb des Betriebsbereiches auftretenden Verdrillung des Planetenträgers (19) entgegengerichtet ist.
